(19) Europäisches Patentamt
European Patent Office
Office européen des brevets

(11) EP 0 958 746 B1

(12) EUROPEAN PATENT SPECIFICATION

(45) Date of publication and mention of the grant of the patent:
**12.03.2003 Bulletin 2003/11**

(51) Int Cl.[7]: **A23C 9/137**, A23L 1/0524, A23L 2/66, A23L 2/52, A23G 9/00

(21) Application number: **99303937.9**

(22) Date of filing: **20.05.1999**

(54) **Acidic protein drinks and process for their production**

Saure proteinhaltige Getränke und Verfahren zu ihrer Herstellung

Aliments liquides acides comprenant des protéines et leur procédé de préparation

(84) Designated Contracting States:
**DE FR GB IT**

(30) Priority: **22.05.1998 JP 14097098**

(43) Date of publication of application:
**24.11.1999 Bulletin 1999/47**

(73) Proprietor: **Fuji Oil Co., Ltd**
**Osaka-Shi, Osaka 542-0086 (JP)**

(72) Inventors:
- **Takahashi, Taro, c/o Fuji Oil Co. Ltd Tsukuba-gun, Ibaraki 300-2497 (JP)**
- **Furuta, Hitoshi, c/o Fuji Oil Co. Ltd. Tsukuba-gun, Ibaraki 300-2497 (JP)**
- **Tobe, Junko, c/o Fuji Oil Co. Ltd. Tsukuba-gun, Ibaraki 300-2497 (JP)**
- **Kiwata, Ryosuke, c/o Fuji Oil Co. Ltd. Tsukuba-gun, Ibaraki 300-2497 (JP)**

(74) Representative: **Hale, Stephen Geoffrey**
**JY & GW Johnson,**
**Kingsbourne House,**
**229-231 High Holborn**
**London WC1V 7DP (GB)**

(56) References cited:
**EP-A- 0 426 434** **DE-C- 4 313 549**
**GB-A- 2 314 564**

- **DATABASE FSTA [Online] INTERNATIONAL FOOD INFORMATION SERVICE (IFIS), FRANFURT/MAIN, DE OLENEV YU A ET AL: "Foaming properties of ice cream stabilizers." Database accession no. 79-2-12-p2065 XP002115923 & KHOLODIL'NAYA TEKHNIKA,1977, Vses. Nauchno-issled. Inst. Kholodil'noi Promyshlennosti, Leningrad, USSR**
- **PHATAK L ET AL: "Isolation and characterization of pectin in sugar-beet pulp." JOURNAL OF FOOD SCIENCE, vol. 53, no. 3, 1988, pages 830-833, XP002115921 Dep. of Food & Nutr., Agric. Exp. Sta., N. Dakota State Univ., Fargo, N. Dakota 58105, USA**
- **RENARD C M G C ET AL: "Structure and properties of apple and sugar-beet pectins extracted by chelating agents." NCE, vol. 244, no. 1, 1993, pages 99-114, XP000368158 Lab. de Biochimie e Tech. des Glucides, Cent. de Recherches Agro-Alimentaires, INRA, Rue de la Geraudiere, BP 527, 44026 Nantes, France**
- **DATABASE WPI Section Ch, Week 8309 Derwent Publications Ltd., London, GB; Class D13, AN 83-20752K XP002115924 & JP 58 009680 A (NIPPON TENSAI SEITO KK), 20 January 1983 (1983-01-20)**
- **GLAHN P E ET AL: "CASEIN-PECTIN INTERACTION IN SOUR MILK BEVERAGES" SYMPOSIUM ON FOOD INGREDIENTS EUROPE, 4 October 1994 (1994-10-04), pages 252-256, XP000604284**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 958 746 B1

## Description

BACKGROUND OF THE INVENTION

1. Field of the Invention

The present invention relates to contain acidic protein drinks and a process for their production, and more specifically it relates to acidic protein drinks prepared by adding citrus juices or other juices, organic acids or inorganic acids to drinks containing animal or vegetable proteins lactic acid bacteria beverages and liquid yogurt, and to a process for their production.

2. Description of the Related Art

In the past, stabilizers such as high methoxy pectin (HM-pectin), sodium carboxymethylcellulose (CMC-Na) and propylene glycol alginate ester (PGA) have normally been used either alone or in combination for production of acidic protein foods in order to prevent coagulation and precipitation of protein particles. However, it is difficult for any of these stabilizers to totally prevent coagulation and precipitation of protein particles, and they sometimes produce the phenomena of phase separation, precipitation, etc. In addition, all stabilizers increase viscosity when used, and are therefore not suited to the tastes of today's consumers who prefer low viscous, light food textures. A number of modifications have been devised to give lower viscosity and prevent coagulation, precipitation and phase separation of protein particles in products, such as using water-soluble soybean polysaccharides as dispersing agents as described in Japanese Unexamined Patent Publication No. 5-7458, but when the pH of the product approaches the neutral range the stability is often lowered, and therefore products with even higher stability have been desired. GB-A-2 314 564 discloses the use of beet-derived pectin for refining beverages produced by alcohol fermentation.

SUMMARY OF THE INVENTION

It is an object of the present invention to provide contain acidic protein drinks with low viscosity and a light texture, which avoid the drawbacks of coagulation, precipitation, phase separation, etc. of protein particles in acidic protein drinks in a wide acidity range and without producing a sticky feel.

AS a result of diligent research toward overcoming the problems described above, the present inventors have found that the above-mentioned problems can be overcome by using beet-derived pectin as a stabilizer in such acidic protein drinks, either alone or in combination with conventional water-soluble soybean polysaccharides, HM-pectin, CMC-Na, PGA and the like. The present invention has been completed on the basis of this finding.

In other words, the present, invention provides an acidic protein drink as claimed in claim 1, as well as a process for producing an acidic protein drink as claimed in claim 3.

DESCRIPTION OF THE PREFERRED EMBODIMENTS

The acidic protein drinks according to the invention are lactic acid bacteria beverages (including live bacteria and sterilized-types), liquid yogurt and acidic beverages prepared by adding citrus juices or other juices or organic or inorganic acids to beverages containing animal or vegetable proteins, such as milk and soybean milk. Animal and vegetable proteins include cow's milk, goat's milk, defatted milk, soybean milk and powdered products thereof including whole fat powdered milk, defatted powdered milk and powdered soybean milk, as well as sweetened milk containing added sugar, concentrated condensed milk, processed milk fortified with minerals such as calcium, vitamins, etc., fermented milk, and proteins derived therefrom. Fermented milk refers to fermented milk which has been fermented by sterilization of the aforementioned animal or vegetable proteins, followed by addition of a lactic acid starter, and if desired, it may be powdered or sugar may be added.

The beet pectin to be used for the invention is a polysaccharide extracted and refined from beets, and most suitably the raw material therefor is beet sugar lees remaining after production of sucrose from beets, or beets themselves, which are suspended in water and prepared under acidic conditions of pH 1-7, preferably pH 2-5, and subjected to acidic hot water extraction at a temperature of 50°C-120°C, preferably 70°C-100°C, to produce the acidic polysaccharide.

The amount of the beet pectin to be used may be generally about 0.05-10 wt%, and preferably 0.2-2 wt%, with respect to the final product, but these ranges do not restrict the scope of the invention because they may vary depending on differences in the protein concentration.

The beet pectin used to carry out the invention may be used in combination with another stabilizer such as water-soluble soybean polysaccharide, HM-pectin, CMC-Na, PGA, locust bean gum, tamarind seed polysaccharide, gelan gum, xanthan gum, guar gum, tara gum, gum Arabic, kalaya gum, carrageenan or agar, in order to supplement the insufficiencies of the stabilizers. That is, it is possible to produce acidic food products which are stable and have low viscosity and a light texture across a wide pH range.

Embodiments of the invention will now be explained through the following examples, which are only exemplary and are not intended to restrict the spirit of the invention. Throughout these examples, the parts and percentages are based on weight.

Experimental Example 1

Fermented milk-containing yogurt drinks were prepared by the following steps.

A. After adding 21 parts of defatted powder milk to 79 parts of water and dispersing, the dispersion was sterilized while stirring at 90-95°C for 15 minutes and cooled to 40°C, after which 3 parts of commercially available plain yogurt was added as a starter for 20 hours of fermentation in an incubator at 38°C, and then a homogenizer was used for card pulverization at 150 kgf/$cm^2$ and cooling was effected at 10-15°C to prepare fermented milk.
B. Two parts each of beet pectin, water-soluble soybean polysaccharide and HM-pectin were added to 98 parts of hot water, and after 10 minutes of stirring at 80°C to dissolution, the solution was cooled to 25°C and the evaporated water was supplemented to prepare a 2% stabilizer solution.
C. Seven parts of sugar was dissolved in 33 parts of water to prepare a sugar solution.
D. The solutions prepared above were cooled to 10-15°C and mixed in a proportion of 40 parts of the fermented milk, 20 parts of the stabilizer solution and 40 parts of the sugar solution, after which a 50% lactic acid solution or saturated sodium citrate solution was used to adjust the pH to 3.8, 4.0, 4.2 or 4.4, and a homogenizer was used for homogenization at 150 kgf/$cm^2$ to make fermented milk-containing yogurt drinks.

The results of evaluating the yogurt drinks are summarized in Table 1.

Table 1

| Evaluation results for yogurt drinks | | | | | |
|---|---|---|---|---|---|
| Run No. | Stabilizer type | pH | Viscosity (mPa•s) | Precipitation rate (%) | Sticky feel |
| 1 | Beet pectin | 3.8 | 10.0 | 0.68 | ○ |
| 2 | Beet pectin | 4.0 | 9.5 | 0.54 | ○ |
| 3 | Beet pectin | 4.2 | 8.0 | 0.48 | ○ |
| 4 | Beet pectin | 4.4 | 8.0 | 0.44 | ○ |
| 5 | Water-soluble soybean polysaccharide | 3.8 | 6.2 | 0.60 | ○ |
| 6 | Water-soluble soybean polysaccharide | 4.0 | 6.6 | 0.64 | ○ |
| 7 | Water-soluble soybean polysaccharide | 4.2 | 18.0 | 1.58 | Δ |
| 8 | Water-soluble soybean polysaccharide | 4.4 | 38.2 | 9.04 | × |
| 9 | HM-pectin | 3.8 | 27.6 | 1.38 | × |
| 10 | HM-pectin | 4.0 | 24.0 | 0.98 | × |
| 11 | HM-pectin | 4.2 | 27.0 | 0.98 | × |
| 12 | HM-pectin | 4.4 | 29.2 | 0.62 | × |

Viscosity: Measured at 10°C with a BM viscometer (Rotor No.1, 60 rpm, 1 minute).
Precipitation rate: Calculated by the following equation after centrifugation of a 50 g sample using a Kokusan centrifuge (750 G x 20 min.)

$$\text{Precipitation rate (\%)} = (\text{weight of precipitate})/\text{weight of sample}) \times 100$$

Sticky feel: The symbols indicate the following.
○: Light with absolutely no sticky feel.
Δ: Viscous with slightly sticky feel, but having product value.
× : Highly viscous with strong sticky feel, and no product value.

As shown in Table 1, when beet pectin was used as the stabilizer (Experiment Nos. 1-4) it was possible to produce fermented milk-containing yogurt drinks which were stable and had low viscosity and a light texture across a wide pH range. With water-soluble soybean polysaccharide (Experiment Nos. 5-8), however, the viscosity of the yogurt drink increased when the pH was 4.2 or higher, resulting in observation of a sticky feel and lower stability. Also, when HM-pectin was used as the stabilizer (Experiment Nos. 9-12), the viscosity was high with a strong sticky feel over the entire pH range.

Experimental Example 2

Fermented milk-containing yogurt drinks were prepared by the procedure described above and tested. However, the pH was 4.2 for all of the products, and the effects of the stabilizers used in combination were observed. The results are summarized in Table 2.

Table 2

| Effect of combined use of stabilizers | | | | |
|---|---|---|---|---|
| Run No. | Stabilizer ratio A:B:C | Viscosity (mPa•s) | Precipitation rate (%) | Stick feel |
| 1 | 0.3:0.1:0 | 8.5 | 0.78 | ○ |
| 2 | 0.2:0.2:0 | 9.6 | 0.84 | ○ |
| 3 | 0.1:0.3:0 | 10.2 | 1.24 | ○ |
| 4 | 0.3:0:0.1 | 10.5 | 0.60 | ○ |
| 5 | 0.2:0:0.2 | 13.4 | 0.64 | ○ |
| 6 | 0.1:0:0.3 | 20.0 | 0.78 | Δ |
| Stabilizer A: Beet pectin<br>Stabilizer B: Water-soluble soybean polysaccharide<br>Stabilizer C: HM pectin | | | | |

The viscosity, precipitation rate and sticky feel were as specified in Table 1.

As shown in Table 2, it was confirmed that using beet pectin in combination provided an effect making it possible to eliminate the drawbacks of stability variation due to product pH and sticky feel, which occur when the other stabilizers are used alone.

Example 1

A lactic acid bacteria beverage was prepared with the composition listed in Table 3.

Table 3

| Starting material composition | |
|---|---|
| Starting material | Parts by weight |
| Fermented milk | 15.0 |
| Beet pectin | 0.4 |
| Water | 19.6 |
| Sugar | 7.0 |
| Water | 58.0 |
| 50% lactic acid solution | q.s. |

1: Fermented milk was prepared in the same manner as Experimental Example 1. 2: After adding 0.4 part of beet pectin to 19.6 parts of hot water at 80°C and stirring at 80°C for 10 minutes until dissolved, the mixture was cooled to normal temperature and water was supplemented to prepare a 2% stabilizer solution. 3: Seven parts of sugar was added to 58 parts of water and the mixture was stirred until dissolved. 4: After combining and mixing 15 parts of the fermented milk of 1:, 20 parts of the 2% stabilizer solution of 2: and 65 parts of the sugar solution of 3:, the pH was adjusted to 4.2 with a 50% lactic acid solution and the mixture was heated to 90°C and stirred for sterilization, after which a homogenizer was used for homogenization at 150 $kgf/cm^2$ and the product was collected in a container, cooled and then stored still in a refrigerator.

The product obtained in this manner was a lactic acid bacteria beverage exhibiting no precipitation or supernatant even after the course of a month, and having a non-sticky, light smooth texture.

Example 2

An orange-flavored acidic milk beverage was prepared with the composition listed in Table 4.

Table 4

| Starting material composition | |
|---|---|
| Starting material | Parts by weight |
| Defatted powdered milk | 1.0 |
| Sugar | 10.0 |
| Beet pectin | 0.2 |
| Water-soluble soybean polysaccharide | 0.2 |
| Orange juice | 10.0 |
| 10% citric acid solution | q.s. |
| Water | To total of 100.0 |

1: One part of defatted powdered milk and 10 parts of sugar were added to 35 parts of water at normal temperature, and the mixture was stirred. 2: Upon adding 0.2 part of beet pectin and 0.2 part of water-soluble soybean polysaccharide to 40 parts of hot water at 80°C, the mixture was stirred at 80°C for 10 minutes until dissolved. 3: After combining the solutions prepared in 1: and 2:, 10 parts of orange juice was added, the pH was adjusted to 3.5 with the 10% citric acid solution, and the total was brought to 100 parts with water. 4: The three-part mixture was filled for hot pack sterilization at 95°C for 30 seconds and stored still in a refrigerator.

The product obtained in this manner was an orange-flavored acidic milk bacteria beverage exhibiting no precipitation or supernatant even after the course of 3 months, and having a non-sticky, light feel.

Example 3

A fermented milk-containing yogurt drink was prepared with the composition listed in Table 5.

Table 5

| Starting material composition | |
|---|---|
| Starting material | Parts by weight |
| Fermented milk | 40.0 |
| Beet pectin | 0.3 |
| HM-pectin | 0.2 |
| Water | 24.5 |
| Sugar | 7.0 |
| Water | 28.0 |
| Saturated sodium citrate solution | q.s. |

1: Fermented milk was prepared in the same manner as Experimental Example 1. 2: After adding 0.3 part of beet pectin and 0.2 part of HM-pectin to 24.5 parts of hot water at 80°C and stirring at 80°C for 10 minutes until dissolved, the mixture was cooled to normal temperature and the evaporated water was supplemented to prepare a 2% stabilizer solution. 3: Seven parts of sugar was added to 28 parts of water and the mixture was stirred until dissolved. 4: After combining and mixing 40 parts of the fermented milk of 1:, 25 parts of the 2% stabilizer solution of 2: and 35 parts of the sugar solution of 3:, the mixture was stirred while cooling at 10-15°C, and after adjusting the pH to 4.5 with a saturated sodium citrate solution, a homogenizer was used for homogenization at 150 $kgf/cm^2$ and the product was collected in a container, cooled and then stored still in a refrigerator.

The product obtained in this manner exhibited no precipitation or supernatant even after the course of one week, and maintained high quality with no sticky feel and a light texture.

By using beet-derived pectin as a stabilizer according to the present invention, it is possible to produce stabilized acidic protein drinks with low viscosity, no sticky feel and a light texture, which are also free of the disadvantages of protein particle coagulation, precipitation and phase separation.

## Claims

1. An acidic protein drink selected from lactic acid bacteria beverages, liquid yogurt and acidic milk beverages prepared by adding citrus juices or other juices or organic or inorganic acids to beverages containing animal or vegetable proteins, **characterised in that** the drink contains beet-derived pectin extracted from a beet-based material under acidic conditions of a pH value of 2 to 5 at a temperature of 70 to 100°C.

2. An acidic protein drink as claimed in claim 1 which is a yogurt drink.

3. A process for the production of an acidic protein drink comprising suspending beet sugar lees or beets in water, subjecting the suspension to acidic hot-water extraction at a temperature of 70 to 100°C and a pH of 2 to 5 to obtain beet-derived pectin, and then adding the beet-derived pectin to an acidic protein drink selected from lactic acid bacteria beverages, liquid yogurt and acidic milk beverages prepared by adding citrus juices or other juices or organic or inorganic acids to beverages containing animal or vegetable proteins.

4. The use of beet-derived pectin as a stabilizer in acidic protein drinks selected from lactic acid bacteria beverages, liquid yogurt and acidic milk beverages prepared by adding citrus juices or other juices or organic or inorganic acids to beverages containing animal or vegetable proteins.

5. The use as claimed in claim 4, wherein the beet-derived pectin is used in an amount from 0.2 to 2 wt%, with respect to the final product.

6. The use as claimed in claim 4 or claim 5, wherein the beet-derived pectin is used in conjuction with another stabilizer.

7. The use as claimed in claim 6, wherein the beet-derived pectin is used in conjunction with another stabilizer selected from water-soluble soybean polysaccharide, HM-pectin, CMC-Na, PGA, locust bean gum, tamarind seed polysaccharide, gelan gum, xanthan gum, guar gum, tara gum, gum Arabic, kalaya gum, carrageenan and agar.

## Patentansprüche

1. Saurer Proteintrunk, der ausgewählt ist aus Milchsäurebakterien-Getränken, Flüssigjoghurt und sauren Milchgetränken, die hergestellt wurden durch Zugabe von Zitrussäften oder anderen Säften oder organischen oder anorganischen Säuren zu tierische oder pflanzliche Proteine enthaltenden Getränken, **dadurch gekennzeichnet, dass** der Trunk von Rüben stammendes Pektin enthält, das unter den sauren Bedingungen eines pH-Werts von 2 bis 5 bei einer Temperatur von 70° bis 100° C aus einem Material auf Rübenbasis extrahiert wurde.

2. Saurer Proteintrunk nach Anspruch 1, der ein Joghurttrunk ist.

3. Verfahren zur Herstellung eines sauren Proteintrunks, aufweisend das Suspendieren von Rübenzucker-Rückständen oder Rüben in Wasser, Unterziehen der Suspension einer sauren Heißwasserextraktion bei einer Temperatur von 70° bis 100° C und einem pH von 2 bis 5, um von Rüben stammendes Pektin zu erhalten, und dann Zugeben des von Rüben stammenden Pektins zu einem sauren Proteintrunk, der ausgewählt ist aus Milchsäurebakterien-Getränken, Flüssigjoghurt und sauren Milchgetränken, die hergestellt wurden durch Zugeben von Zitrussäften oder anderen Säften oder organischen oder anorganischen Säuren zu tierische oder pflanzliche Proteine enthaltenden Getränken.

4. Verwendung von Pektin, das von Rüben stammt, als ein Stabilisator in sauren Proteintrünken, die ausgewählt sind aus Milchsäurebakterien-Getränken, Flüssigjoghurt und sauren Milchgetränken, die hergestellt wurden durch Zugeben von Zitrussäften oder anderen Säften oder organischen oder anorganischen Säuren zu tierische oder pflanzliche Proteine enthaltenden Getränken.

5. Verwendung nach Anspruch 4, bei der das von Rüben stammende Pektin in einer Menge von 0,2 bis 2 Gew.%, bezogen auf das Endprodukt, verwendet wird.

6. Verwendung nach Anspruch 4 oder Anspruch 5, bei der das von Rüben stammende Pektin zusammen mit einem weiteren Stabilisator verwendet wird.

7. Verwendung nach Anspruch 6, bei der das von Rüben stammende Pektin zusammen mit einem weiteren Stabilisator, der ausgewählt ist aus wasserlöslichem Sojabohnen-Polisaccharid, HM-Pektin, CMC-Na, PGA, Johannisbrotgummi, Tamarindensamen-Polisaccharid, Gelangummi, Xanthanlösung, Guargum, Taragummi, Gummi Arabicum, Karayagummi, Carrageen und Agar, verwendet wird.

## Revendications

1. Boisson protéinique acide choisie parmi les boissons à base de bactéries d'acide lactique, le yaourt liquide et les boissons lactées acides préparées en ajoutant des jus d'agrumes ou autres jus ou des acides organiques ou inorganiques aux boissons contenant des protéines animales ou végétales, **caractérisée en ce que** la boisson contient une pectine dérivée de la betterave extraite à partir d'un matériau à base de betterave dans les conditions acides d'une valeur de pH de 2 à 5 à une température de 70 à 100°C.

2. Boisson protéinique acide selon la revendication 1 qui est un yaourt à boire.

3. Procédé de fabricatio d'une boisson protéinique acide comprenant les étapes consistant à mettre en suspension des levures de sucre de betterave ou des betteraves dans de l'eau, à soumettre la suspension à une extraction à l'eau chaude acide à une température de 70 à 100°C et un pH de 2 à 5 pour obtenir une pectine dérivée de la betterave, puis à ajouter la pectine dérivée de la betterave à une boisson protéinique acide choisie parmi les boissons à base de bactéries d'acide lactique, le yaourt liquide et les boissons lactées acides préparées en ajoutant des jus d'agrumes ou autres jus ou des acides organiques ou inorganiques aux boissons contenant des protéines animales ou végétales.

4. Utilisation de la pectine dérivée de la betterave à titre de stabilisant dans des boissons protéiniques acides choisies parmi les boissons à base de bactéries d'acide lactique, le yaourt liquide et les boissons lactées acides préparés en ajoutant des jus d'agrumes ou autres jus ou des acides organiques ou inorganiques aux boissons contenant des protéines animales ou végétales.

5. Utilisation selon la revendication 4, dans laquelle la pectine dérivée de la betterave est utilisée en une quantité de 0,2 à 2 % en poids, par rapport au produit final.

6. Utilisation selon la revendication 4 ou 5, dans laquelle la pectine dérivée de la betterave est utilisée conjointement avec un autre stabilisant.

7. Utilisation selon la revendication 6, dans laquelle la pectine dérivée de la betterave est utilisée conjointement avec un autre stabilisant choisi parmi un polysaccharide de soja hydrosoluble, la HM-pectine, CMC-Na, PGA, la gomme de caroube, un polysaccharide de graines de tamarinier, la gomme gellane, la gomme xanthane, la gomme tara, la gomme arabique, la gomme karaya, la carraghénine et l'agar.